# EUROPÄISCHE PATENTANMELDUNG

(11) **EP 1 254 920 A1**
(43) Veröffentlichungstag der Anmeldung: **06.11.2002**
(21) Anmeldenummer: 02008196.4
(22) Anmeldetag: 17.04.2002
(51) Int. Cl.: C08K 5/01, C08L 21/00

(54) **Terpolymere und spezielle Mineralöle enthaltende Kautschukmischungen**

(30) Priorität: 30.04.2001 DE 10121161
(71) Anmelder: BAYER AG, 51368 Leverkusen (DE)
(72) Erfinder: Rawlinson, Adrian, 51375 Leverkusen (DE); Pask, Stephen, Dr., 41542 Dormagen (DE); Wendling, Peter, 51375 Leverkusen (DE)

(57) **Zusammenfassung**

Die Erfindung betrifft Kautschukmischungen bestehend aus einem Terpolymer (NSBR) auf Basis eines ungesättigten olefinischen Nitrils, einer vinylaromatischen Verbindung und eines konjugierten Diens, einem unpolaren Kautschuk und einem speziellen Mineralöl. Die erfindungsgemäßen Kautschukmischungen weisen insbesondere ein verbessertes Nassrutschverhalten auf im Vergleich zu Kautschukmischungen, die mit den bisher üblichen aromatischen Mineralölen versetzt wurden.

## Beschreibung

Die Erfindung betrifft Kautschukmischungen enthaltend ein Terpolymer (NSBR) auf Basis eines ungesättigten olefinischen Nitrils, einer vinylaromatischen Verbindung und eines konjugierten Diens sowie einen unpolaren Kautschuk und ein spezielles Mineralöl.

Es ist bekannt, aus wirtschaftlichen und technischen Gründen Kautschuke, wie SBR-Kautschuke oder BR-Kautschuke, mit aromatischen Ölen zu versetzen. Durch das Strecken der Kautschuke mit Mineralölen kann z.B. deren Verarbeitungsverhalten verbessert werden, ohne die physikalischen Eigenschaften der Kautschuke zu beeinträchtigen.

Die bislang dafür verwendeten aromatischen Öle haben jedoch den Nachteil, dass sie häufig Bestandteile enthalten, die karzinogen wirken. Es wurde deshalb nach Alternativen für die bislang verwendeten aromatischen Öle gesucht, die keine karzinogene Wirkung aufweisen. Es hat sich nun gezeigt, dass Mineralöle, die einen Dimethylsulfoxid (DMSO)-Extrakt (entsprechend IP346-Testmethode) von ≤3 Gew.-% aufweisen und daher nicht als kanzerogen betrachtet werden, geeignet erscheinen, um die verschiedensten Kautschuke damit zu versetzen. Als Vertreter solcher spezieller Mineralöle sind z.B. zu erwähnen: Mild Extraction Solvate (MES) sowie Treated Distillate Aromatic Extract (TDAE). Solche Mineralöle werden beispielsweise von den Firmen Shell, Esso, BP und Nynas vertrieben.

Nachteilig ist jedoch, dass Kautschuke, die mit den genannten speziellen Mineralölen, wie TDAE und MES, versetzt werden, Qualitätsverluste aufweisen, insbesondere im Hinblick auf das Nassrutschverhalten. Dies bedeutet jedoch, dass solche Kautschukmischungen wenig geeignet sind, um beispielsweise daraus Reifenlaufflächen herzustellen.

Aufgabe der vorliegenden Erfindung ist es nun, Kautschukmischungen zur Verfügung zu stellen, die mit nicht karzinogen Mineralölen versetzt bzw. gestreckt sind und die vergleichbare oder bessere technische Qualitäten aufweisen als Kautschukmischungen, die mit den bisher üblichen aromatischen Mineralölen versetzt wurden. Insbesondere sollen die erfindungsgemäßen Kautschukmischungen ein verbessertes Nassrutschverhalten aufweisen.

Die Aufgabe wurde dadurch gelöst, dass man Kautschukmischungen, die nicht karzinogene Mineralöle enthalten, Terpolymere (NSBR) auf Basis eines ungesättigten olefinischen Nitrils, einer vinylaromatischen Verbindung und eines konjugierten Diens zusetzt.

Gegenstand der vorliegenden Erfindung sind daher Kautschukmischungen, bestehend aus wenigstens
- a): einem unpolaren Kautschuk,
- b): einem aus einem olefinisch ungesättigten Nitril, einer vinylaromatischen Verbindung und einem konjugierten Dien bestehenden Terpolymer
und
- c): einem Mineralöl, das einen DMSO-Extrakt ≤3 Gew.-% aufweist,

wobei die Komponente a) in Mengen von 1 bis 99 Gew.-Teilen, die Komponente b) in Mengen von 1 bis 99 Gew.-Teilen und die Komponente c) in Mengen von 1 bis 50 Gew.-Teilen, jeweils bezogen auf die gesamte Menge an Kautschuk, vorhanden sind.

Bevorzugt sind Kautschukmischungen, in denen die Komponente a) in Mengen von 5 bis 95 Gew.-Teilen, insbesondere 20 bis 80 Gew-Teilen, die Komponente b) in Mengen von 5 bis 95 Gew-Teilen, insbesondere 20 bis 80 Gew.-Teilen, und die Komponente c) in Mengen von 5 bis 40 Gew.-Teilen, insbesondere 5 bis 25, Gew.-Teilen, jeweils bezogen auf die gesamte Menge an Kautschuk, vorhanden sind.

Als unpolare Kautschuke können für die erfindungsgemäßen Kautschukmischungen eingesetzt werden sowohl natürliche Kautschuke (NR), als auch entsprechende synthetische Kautschuke, wie Polybutadiene (BR), Styrol-Butadien-Copolymere (SBR), Polyisoprenkautschuke (IR), Isopren-Butadienkautschuke, Isopren-Butadien-Styrolkautschuke (S-SIBR) und Ethylen-Propylen-Dien-Terpolymere (EPDM), bevorzugt SBR, BR, IR und NR.
Ganz besonders bevorzugt sind BR und SBR.

Die genannten unpolaren Kautschuke sind allgemein bekannt und werden beispielsweise durch radikalische Emulsionspolymerisation, durch radikalische Lösungspolymerisation, durch anionische oder kationische Polymerisation oder durch Polymerisation mit Ziegler-Natter-Katalysatoren hergestellt.

Selbstverständlich können die genannten Kautschuke einzeln oder im beliebigen Gemisch untereinander in die erfindungsgemäße Kautschukmischung eingesetzt werden. Wenn verschiedene Kautschuke im Gemisch untereinander eingesetzt werden, so richtet sich die Menge der eingesetzten Kautschuke u.a. nach dem jeweiligen Verwendungs- und Einsatzzweck der erfindungsgemäßen Kautschukmischung. Das Mengen- bzw. Mischungsverhältnis wird daher entsprechend angepasst.

Das als Komponente b) in die erfindungsgemäßen Kautschukmischungen eingesetzte Terpolymer basiert - wie erwähnt - auf ungesättigten olefinischen Nitrilen, vinylaromatischen Verbindungen und konjugierten Dienen.

Als konjugierte Diene kommen insbesondere in Frage: 1,3-Butadien, 2,3-Dimethyl, 1,3-Butadien, 2-Methyl-1,3-Butadien, 2-Ethyl, 1,3-Butadien, 1,3-Pentadien, 2-Methyl-1,3-Pentadien, 1,3-Hexadien, 2-Phenyl, 1,3-Butadien, 3,4-Dimethyl, 1,3-Hexadien, 1,3-Heptadien, 1,3-Octadien, 4,5-Diethyl-1,3-Octadien, 3-Methyl-1,3-Pentadien, 4-Methyl-1,3-Pentadien oder Mischungen der genannten Diene. Bevorzugt werden als konjugierte Diene eingesetzt 1,3-Butadien und 2-Methyl-1,3-Butadien. 1,3-Butadien ist besonders bevorzugt.

Als vinylaromatische Verbindungen werden solche genannt, die 8 bis 16 Kohlenstoffatome enthalten, wie Styrol, α-Methylstyrol, 2-Methylstyrol, 3-Methylstyrol, 4-Methylstyrol, 4-Cyclohexylstyrol, 4-p-Toluolstyrol, p-Chlorstyrol, p-Bromstyrol, 4-tert.-Butylstyrol, 1-Vinylnaphthalen und 2-Vinylnaphthalen oder Mischungen derselben. Styrol ist bevorzugt.

Als olefinisch ungesättigte Nitrile können zum Aufbau der Terpolymere eingesetzt werden Acrylnitril, Methacrylnitril, Ethylacrylnitril, Crotonnitril und 2-Pentennitril oder Mischungen derselben. Acrylnitril ist bevorzugt.

Das jeweils günstigste Verhältnis der oben genannten Monomeren in dem erfindungsgemäß eingesetzten Terpolymeren kann leicht durch entsprechende Vorversuche bestimmt werden, wobei sich das jeweils günstigste Mischungsverhältnis u.a. nach dem jeweiligen Einsatzzweck der erfindungsgemäßen Kautschukmischungen richtet.

Die erfindungsgemäß einzusetzenden Terpolymere enthalten im Allgemeinen die konjugierten Diene in Mengen von etwa 40 bis 89 Gew.-%, die vinylaromatischen Verbindungen in Mengen von etwa 10 bis 40 Gew.-% und die olefinisch ungesättigten Nitrile in Mengen von etwa 1 bis 50 Gew.-%, wobei sich die Mengen der einzelnen Komponenten zu 100 Gew.-% ergänzen.

Bevorzugt werden die konjugierten Diene in Mengen von 40 bis 80 Gew.-% eingesetzt, die vinylaromatischen Verbindungen in Mengen von 10 bis 35 Gew.-% und die olefinisch ungesättigten Nitrile in Mengen von 10 bis 40 Gew.-%.

In Abhängigkeit der Mengen der eingesetzten Aufbaukomponenten beträgt die Glasübergangstemperatur der erfindungsgemäß eingesetzten Terpolymere etwa -60 bis 0°C, bevorzugt -45 bis -15°C.

Die erfindungsgemäß eingesetzten NSBR-Terpolymere sind beispielsweise näher beschrieben in EP-A-537 640, US-A 5 310 815 sowie US-A 5 225 479.

Als Komponente c) werden den erfindungsgemäßen Kautschukmischungen Mineralöle zugesetzt, die einen DMSO-Extrakt ≤3 Gew.-% aufweisen und als nicht karzinogen gelten.

### Bevorzugt werden als Mineralöle eingesetzt:

Mild Extraction Solvate (MES),
Treated Distillate Aromatic Extract (TDAE) sowie Mineralöle, wie naphthenische Öle oder hydrierte naphthenische Öle.

Insbesondere werden eingesetzt MES und TDAE.
Die chemische Zusammensetzung der oben genannten, erfindungsgemäß eingesetzten Minieralöle sind in der Literatur bekannt.

Die Mineralöle können einzeln oder im Gemisch untereinander eingesetzt werden. Das günstigste Mischungsverhältnis lässt sich leicht durch entsprechende Vorversuche bestimmen.

Typische Eigenschaften von MES-Öl und TDAE-Öl sind in den folgenden Tabellen beschrieben:

| MES | | |
|---|---|---|
| Aussehen | leicht braune klare Flüssigkeit | |
| Dichte 15°C | 907 kg/m3 | ASTM 4502 |
| Fließpunkt | 3°C | ASTM D97 |
| Viskosität 40°C | 200+/-30 mm2/s | ASTM D445 |
| Viskosität 100°C | 15+/-2 mm2/s | ASTM D445 |
| Refraktionsindex 20°C | 1.500+/-0.005 | ASTM D2159 |
| Viskositäts Dichte Konstante | 0.845+/-20 | ASTM D2140 |
| Kohlenstoff-Typ: | | ASTM D 2140 |
| Aromatisch | 11-17% | |
| Napthenisch | 25-32% | |
| Paraffinisch | 54-68% | |
| Glasumwandlungstemperatur | -58+/-3°C | ASTM E1356-98 |
| Flammpunkt | 220 °C min | ASTM D92 |
| Wassergehalt | 0.5% | ASTM D6304-98a |
| Gehalt an polycyclischen Aromaten | 2.90% max | IP346 |

| **TDAE** | | |
|---|---|---|
| Aussehen | leicht braune Flüssigkeit | |
| Dichte 15°C | 0.943 kg/m3 | ASTM 4502 |
| Fließpunkt | 0°C max | ASTM D97 |
| Viskosität 40°C | 400+/-30 mm2/s | ASTM D445 |
| Viskosität 100°C | 19+/-2 mm2/s | ASTM D445 |
| Refraktionsindex 20°C | 1.520+/-0.005 | ASTM D2159 |
| Viskositäts Dichte Konstante | 0.900+/-40 | ASTM D2140 |
| Kohlenstoff-Typ: | | ASTM D 2140 |
| Aromatisch | 25-30% | |
| Napthenisch | 25-30% | |
| Paraffinisch | 42-50% | |
| Glasumwandlungstemperatur | -47+/-3 | ASTM E1356-98 |
| Flammpunkt | 220 min | ASTM D92 |
| Wassegehalt | 0.5% | ASTM D6304-98a |
| Gehalt an polycyclischen Aromaten | 2.90% max | IP346 |

Selbstverständlich können den erfindungsgemäßen Kautschukmischungen neben den erwähnten Komponenten a) bis c) noch die bekannten Kautschukhilfsmittel zugesetzt werden, wie Füllstoffe, Pigmente, Zinkoxid, Stearinsäure, Vulkanisationsbeschleuniger, Vulkanisations- bzw. Vernetzungsmittel auf Schwefel- oder Peroxidbasis, Stabilisatoren, Antioxidantien, Harze, Öle, Wachse sowie Inhibitoren.

Bevorzugt werden als Füllstoffe Kieselsäure und Ruß zugesetzt. Besonders bevorzugt sind dabei gefällte Kieselsäuren und feinteilige Furnace Ruße.

Die Füllstoffe und die erwähnten Kautschukhilfsmittel werden in den üblichen Mengen eingesetzt und sind dem Fachmann bekannt.

Die erfindungsgemäßen Kautschukmischungen können hergestellt werden, indem man die einzelnen Komponenten in dafür geeigneten Mischaggregaten, wie Walzen oder Kneter, intensiv miteinander mischt. Die Reihenfolge der Zugabe der einzelnen Komponenten ist dabei nicht kritisch und kann frei gewählt werden. Selbstverständlich ist es dabei auch möglich, dass das einzusetzende Mineralöl ganz oder teilweise zuvor den einzelnen Komponenten a) und b) beigemischt wird.

Die erfindungsgemäßen Kautschukmischungen können in üblicher Weise vulkanisiert werden, wobei sich das Vulkanisationsverfahren nach dem jeweiligen Anwendungszweck der Kautschukmischungen richtet.

Die erfindungsgemäßen Kautschukmischungen können zur Herstellung von Vulkanisaten aller Art verwendet werden, beispielsweise zur Herstellung von Reifenbauteilen, wie Reifenlaufflächen und Seitenwände, oder zur Herstellung von technischen Gummiwaren, wie Riemen, Transportbändern, Bodenbelägen, Matten, Transportbändern, Dichtungen, Schuhsohlen und Schläuchen.

Bevorzugt ist die Verwendung der erfindungsgemäßen Kautschukmischungen im Reifenbau, insbesondere für Reifenlaufflächen.

In den folgenden Beispielen wurden die Eigenschaften der erfindungsgemäßen Kautschukmischungen, der Vergleichskautschukmischungen und der daraus hergestellten Vulkanisate wie folgt gemessen:
- (1): Die Polymerzusammenstellung des Termonomeren wurde mittels IRSpektroskopie gemessen.
- (2): Die Mooneyviskosität der Kautschuke wurde nach DIN 53523 ermittelt.
- (3): Die Zugfestigkeit der Vulkanisate wurde nach DIN 53504 ermittelt.
- (4): Die Bruchdehnung der Vulkanisate wurde nach DIN 53504 ermittelt.
- (5): Der Modul der Vulkanisate bei 100 und 300 % Dehnung wurde nach DIN 53504 ermittelt.

- (6): Die Härte der Vulkanisate bei 23°C und 70°C wurde nach DIN 53505 ermittelt.
- (7): Die Rückprallelastizität bei 23°C und 70°C wurde nach DIN 53512 ermittelt.
- (8): Der Abrieb der Vulkanisate wurde nach DIN 53516 ermittelt.
- (9): Die tan δ-Werte der Vulkanisate wurde nach DIN 53513 ermittelt.

Folgende Komponenten wurden für die Vergleichskautschukmischung 1 und 2 sowie die erfindungsgemäßen Kautschukmischungen 1, 2 und 3 verwendet:
SBR 1712 (Krynol® 1712, Emulsions-SBR, 23,5 % Styrol, 37,5 phr arom. Öl, Hersteller Bayer Elastomeres),
SBR 1712 (Emulsions-SBR, 23,5 % Styrol, 37,5 phr MES-Öl),
SBR 1513 (Cariflex® 1513, Emulsions-SBR, 40 % Styrol, Hersteller DOW)
NSBR (durch Emulsionspolymerisation hergestellter Kautschuk, 58,5 % Butadien, 20,3 % Styrol und 21,1 % Acrylnitril, Mooney-Viskosität 49),
Renopal® 450 (aromatischer Mineralöl-Weichmacher, Hersteller Fuchs Chemie),
MES-Öl (Catenex SNR®, Hersteller Shell)
Corax® N339 (Ruß, Hersteller Degussa Hüls AG),
Vulkasil S (Kieselsäure, Bayer AG),
Si 69® (Bis-3-(triethoxysilylpropyl)tetrasulfid, Hersteller Degussa AG), Stearinsäure,
ZnO (Zinkoxid),
Schwefel,
IPPD (Vulkanox® 4010, N-Isopropyl-N'-phenyl-p-phenylendiamin, Hersteller Bayer AG),
6PPD (Vulkanox® 4020 N-(1,3-Dimethylbutyl)-N'-phenyl-p-phenylendiamin, Hersteller Bayer AG),
DPG (Vulkacit® D, Diphenylguanidin, Hersteller Bayer AG),
CBS (Vulkacit® CZ/C N-Cyclohexyl-2-benzothiazyl-sulfenamid, Hersteller Bayer AG),

Die einzelnen Gewichtsanteile der Komponenten sind in den Tabelle 1 und 2 aufgeführt.

Die Komponenten wurden in einem Kneter (Werner & Pfleiderer GK 1.5) bei 50 UpM gemischt. Die Knetertemperatur betrug 60°C. Die Vulkanisationsbeschleuniger wurden auf einer Walze zugemischt.

Die Ergebnisse der Prüfungen sind in Tabelle 1 und 2 aufgeführt.

**Tabelle 1**

| (Ruß-Mischung) | | | |
|---|---|---|---|
| | **1* 37,5 phr Aromatisches Öl** | **2* 37,5 phr MES Öl** | **3 37,5 phr MES Öl mit NSBR** |
| SBR 1712 (37,5 phr Aromatisches Öl) | 110 | 0 | 0 |
| SBR 1712 (37,5 phr MES Öl) | 0 | 110 | 110 |
| SBR 1513 | 20 | 20 | 0 |
| **NSBR 20 % ACN** | 0 | 0 | 20 |
| Aromatisches Öl | 7,5 | 0 | 0 |
| MES Öl | 0 | 7,5 | 7,5 |
| N-339 Ruß | 50 | 50 | 50 |
| Stearinsäure | 2 | 2 | 2 |
| Zinkoxid | 3 | 3 | 3 |
| IPPD | 1 | 1 | 1 |
| 6PPD | 1 | 1 | 1 |
| Schwefel | 2 | 2 | 2 |
| CBS | 1,5 | 1,5 | 1,5 |
| DPG | 0,2 | 0,2 | 0,2 |

| | | | |
|---|---|---|---|
| *Vergleich | | | |

| **Vulkanisat Eigenschaften** | **1* 37,5 phr Aromatisches Öl** | **2* 37,5 phr MES Öl** | **3 37,5 phr MES Öl mit NSBR** |
|---|---|---|---|
| Zugfestigkeit (MPa) | 22,9 | 17,8 | 16,5 |
| Bruchdehnung (%) | 683 | 573 | 533 |
| M 100 % (MPa) | 1,2 | 1,1 | 1,2 |
| M 300 % (MPa) | 5,6 | 6 | **6,2** |
| Härte 23°C | 54 | 53 | 54 |
| Härte 70°C | 49 | 49 | 48 |
| Elastizität 23°C | 33 | **38** | **33** |
| Elastizität 70°C | 49 | 51 | 53 |
| DIN Abrieb (mm³) | 170 | **124** | **108** |
| | | | |
| Tan delta 0°C | 0,424 | **0,326** | **0,460** |
| Tan delta 60°C | 0,162 | **0,148** | **0,147** |

Dem Fachmann ist bekannt, dass ein hoher tan δ- Wert bei 0°C eine gute Nassrutschfestigkeit anzeigt, während ein niedriger tan δ- Wert bei 60°C für einen niedrigen Rollwiderstand steht.

Beispiel 1 (Vergleichsbeispiel) enthält 37,5 phr aromatisches Öl. Wird das aromatische Öl durch MES-Öl im Beispiel 2 (Vergleichsbeispiel) substituiert verschlechtert sich die Nassrutschfestigkeit (niedriger tan δ- Wert bei 0°C). Dagegen werden Abriebsbeständigkeit und Rollwiderstand (höherer tan δ- Wert bei 60°C) verbessert. Im erfindungsgemäßen Beispiel 3 wird das hochstyrol-haltige SBR 1513 durch das Terpolymere (NSBR) ersetzt. Dadurch werden gegenüber Beispiel 1 (Vergleichsbeispiel) die Abriebsbeständigkeit, die Nassrutschfestigkeit und der Rollwiderstand deutlich verbessert. Gegenüber Beispiel 2 (Vergleichsbeispiel) werden bei gleichem Rollwiderstand die Nassrutschfestigkeit und der Rollwiderstand deutlich verbessert. Die erfindungsgemäßen Kautschukmischungen sind dem Stand der Technik deutlich überlegen.

**Tabelle 2**

| (Ruß-Kieselsäure-Mischung) | | | |
|---|---|---|---|
| | **4* 37,5 phr Aromatisches Öl** | **5* 37,5 phr MES Öl** | **6 37,5 phr MES Öl** |
| SBR 1712 (37,5 phr Aromatisches Öl) | 110 | 0 | 0 |
| SBR 1712 (37,5 phr MES Öl) | 0 | 110 | 110 |
| SBR 1513 | 20 | 20 | 0 |
| **NSBR 20 % ACN** | 0 | 0 | **20** |
| Aromatisches Öl | 7,5 | 0 | 0 |
| MES Öl | 0 | 7,5 | 7,5 |
| N-339 Ruß | 25 | 25 | 25 |
| Vulkasil S | 25 | 25 | 25 |
| Si69 | 2 | 2 | 2 |
| Stearinsäure | 2 | 2 | 2 |
| Zinkoxid | 3 | 3 | 3 |
| IPPD | 1 | 1 | 1 |
| 6PPD | 1 | 1 | 1 |

| | **4* 37,5 phr Aromatisches Öl** | **5* 37,5 phr MES Öl** | **6 37,5 phr MES Öl** |
|---|---|---|---|
| Schwefel | 2 | 2 | 2 |
| CBS | 1,5 | 1,5 | 1,5 |
| DPG | 0,2 | 0,2 | 0,2 |

| | | | |
|---|---|---|---|
| *Vergleich | | | |

| **Vulkanisat Eigenschaften** | **4* 37,5 phr Aromatisches Öl** | **5* 37,5 phr MES Öl** | **6 37,5 phr MES Öl mit NSBR** |
|---|---|---|---|
| Zugfestigkeit (MPa) | 23,9 | 22,2 | 15,5 |
| Bruchdehnung (%) | 745 | 716 | 588 |
| M 100 % (MPa) | 1,1 | 1 | 1,1 |
| M 300 % (MPa) | 4,5 | 4,3 | **4,7** |
| Härte 23°C | 53 | 50 | 51 |
| Härte 70°C | 47 | 45 | 46 |
| Elastizität 23°C | 36 | **39** | **35** |
| Elastizität 70°C | 52 | 53 | 53 |
| DIN Abrieb (mm³) | 211 | **172** | **132** |
| | | | |
| Tan delta 0°C | 0,423 | **0,309** | **0,435** |
| Tan delta 60°C | 0,151 | **0,133** | **0,136** |

Es ist dem Fachmann bekannt, dass auch Gemische verschiedener Füllstoffe eingesetzt werden können. Auch in diesen Fällen sind die erfindungsgemäßen Kautschukmischungen dem Stand der Technik überlegen. Dabei führt die Substitution des aromatischen Öl durch MES-Öl zu einer schlechteren Nassrutschfestigkeit (vergleiche Beispiel 4 mit Beispiel 5, beides Vergleichsbeispiele). Im erfindungsgemäßen Beispiel 6 führt der Austausch von ESBR 1513 durch das Terpolymere (NSBR) zur deutlichen Verbesserung in den Eigenschaften Abriebsbeständigkeit, Nassrutschfestigkeit und Rollwiderstand. Gegenüber Beispiel 4 (Vergleichsbeispiel) ist Abriebsbeständigkeit, Naßrutschfestigkeit (höherer tan δ- Wert bei 0°C) und Rollwiderstand (niedriger tan δ- Wert bei 60°C) und gegenüber Beispiel 5 (Vergleichsbeispiel) Abriebsbeständigkeit und Nassrutschfestigkeit verbessert. Die erfindungsgemäßen Kautschukmischungen sind dem Stand der Technik deutlich überlegen.

## Patentansprüche

1. Kautschukmischungen bestehend aus wenigstens
a) einem unpolaren Kautschuk
b) einem aus einem olefinisch ungesättigten Nitril, einer vinylaromatischen Verbindung und einem konjugierten Dien bestehenden Terpolymer,
und
c) einem Mineralöl, das einen DMSO-Extrakt ≤3 Gew.-% aufweist,
wobei die Komponente a) in Mengen von 1 bis 99 Gew.-Teilen, die Komponente b) in Mengen von 1 bis 99 Gew.-Teilen und die Komponente c) in Mengen von 1 bis 50 Gew.-Teilen, jeweils bezogen auf die gesamte Menge an Kautschuk, vorhanden sind.

2. Kautschukmischungen nach Anspruch 1, **dadurch gekennzeichnet, dass** die Komponente a) in Mengen von 5 bis 95 Gew.-Teilen, die Komponente b) in Mengen von 5 bis 95 Gew.-Teilen und die Komponente c) in Mengen von 5 bis 40 Gew.-Teilen in den Kautschukmischungen vorhanden sind.

3. Kautschukmischungen nach Anspruch 1, **dadurch gekennzeichnet, dass** der unpolare Kautschuk ausgewählt ist aus der Gruppe der natürlichen Kautschuke, der Polybutadien-Kautschuke, Styrol-Butadien-Kautschuke, der Polyisopren-Kautschuke, der Isopren-Butandien-Kautschuke, der Isopren-Butadien-Styrol-Kautschuke sowie der Ethylen-Propylen-Dien-Kautschuke.

4. Kautschukmischungen nach Anspruch 1, **dadurch gekennzeichnet, dass** die Komponente b) (Terpolymer) aus 1,3-Butadien oder 2-Methyl-1,3-Butadien oder Mischungen derselben sowie aus Styrol und aus Acrylnitril aufgebaut ist.

5. Verwendung der Kautschukmischungen nach Anspruch 1 zur Herstellung von Reifen und Reifenbauteilen sowie zur Herstellung von technischen Gummiartikeln.
